**Europäisches Patentamt**

**European Patent Office**

**Office européen des brevets**

(11) Veröffentlichungsnummer : **0 123 021**
**B1**

(12) **EUROPÄISCHE PATENTSCHRIFT**

(45) Veröffentlichungstag der Patentschrift :
**07.09.88**

(21) Anmeldenummer : **84100849.3**

(22) Anmeldetag : **27.01.84**

(51) Int. Cl.⁴ : **F 16 K 31/50**

㊴ **Armatur.**

(30) Priorität : **23.04.83 DE 3314781**

(43) Veröffentlichungstag der Anmeldung :
**31.10.84 Patentblatt 84/44**

(45) Bekanntmachung des Hinweises auf die Patenterteilung : **07.09.88 Patentblatt 88/36**

(84) Benannte Vertragsstaaten :
**CH DE FR GB IT LI NL**

(56) Entgegenhaltungen :
**EP-A- 0 010 113**
**DE-A- 2 417 057**
**DE-A- 2 434 810**
**US-A- 2 212 572**

(73) Patentinhaber : **Deutsche Babcock Werke Aktiengesellschaft**
**Duisburger Strasse 375**
**D-4200 Oberhausen 1 (DE)**

(72) Erfinder : **Gladisch, Manfred**
**Holthauser Strasse 34**
**D-4690 Herne 1 (DE)**
Erfinder : **Winklmann, Erwin**
**Reiherstrasse 20**
**D-4200 Oberhausen 11 (DE)**

(74) Vertreter : **Müller, Jürgen, Dipl.-Ing.**
**Deutsche Babcock AG Lizenz- und Patentabteilung**
**Duisburger Strasse 375**
**D-4200 Oberhausen 1 (DE)**

## Beschreibung

Die Erfindung betrifft eine Armatur mit den Merkmalen des Oberbegriffes des Anspruches 1.

Derartige Armaturen sind durch einen elektromotorischen Stellantrieb fern zu bedienen. Die Armatur benötigt zu ihrer Betätigung eine translatorische Kraft (Ein-und Ausfahren der Spindel), während der Stellantrieb eine Rotationsbewegung ausführt. Die Umwandlung des Drehmomentes in eine Axialkraft wird durch eine kugelgelagerte Spindelmutter und ein in die Ventilspindel geschnittenes Trapezgewinde vollzogen. Die Spindelbewegung in Schließrichtung der Armatur wird durch die auf die Ventilspindel aufgeschraubte, gesicherte Hubbegrenzungsmutter begrenzt.

Bei Armaturen-Stellantriebs-Kombinationen mit erhöhter sicherheitstechnischer Bedeutung, zum Beispiel in Kernkraftwerken, wird die festigkeitsmäßige Beherrschung verschiedener Störfälle gefordert. Ein Störfall besteht aus dem Versagen der Antriebsabsteuerung, d. h. der Stellantrieb fährt die Hubbegrenzungsmutter mit seinem maximalen Drehmoment vermehrt um das aus den rotierenden Massen resultierende Schwungmoment auf die Spindelmutter. Die Höhe des Schwungmomentes beim Anfahren in die Hubbegrenzung bei gegebenem Stellantrieb ist eine Funktion der Armaturensteifigkeit. Das bekannte System besitzt eine sehr hohe Steifigkeit. Die sich ergebenden Anlaufkräfte und Momente können in vielen Fällen zu einer Zerstörung der Armatur und des Stellantriebes führen.

Eine gattungsgemäße Armatur ist aus der US-A-2 212 572 bekannt. Bei dieser Armatur kann die Spindelmutter gegen die Rückstellkraft der Feder axial auswandern, wenn eine vorbestimmte Last überschritten wird. Das ist zum Beispiel der Fall, wenn die Spindel in der Schließstellung einer temperaturbedingten Längendehnung unterliegt. Die bekannte Armatur kann mit einem elektromotorischen Stellantrieb versehen werden. Versagt die bei solchen Stellantrieben übliche Endlagenabschaltung, so wird das Stellmoment weiterhin in die Spindel eingeleitet, da lediglich die Federn zusammengedrückt werden.

Aus der DE-A-2 417 057 ist ein Ventil bekannt, bei dem ein elektromotorischer Stellantrieb über eine Übergangsbuchse auf die Spindelmutter wirkt. Die Übergangsbuchse ist über Federn auf der Spindelmutter derart abgestützt, daß die Spindelmutter gegenüber der Übergangsbuchse axial verschiebbar ist. Übersteigt die Verschiebung der Spindelmutter einen vorgegebenen Wert, so wird ein Endschalter zur Abschaltung des Stellantriebes betätigt. Sofern diese Endlagenabschaltung versagt, so wirkt das Moment des Stellantriebes weiterhin auf die Spindel.

Der Erfindung liegt die Aufgabe zugrunde, trotz beengter Einbauverhältnisse die Armaturensteifigkeit soweit herabzusetzen, daß die entstehenden Überhöhungsmomente auf ein beherrschbares Maß reduziert werden.

Diese Aufgabe wird erfindungsgemäß durch die kennzeichnenden Merkmale des Anspruches 1 gelöst.

Bei einem Auftreten des angenommenen Störfalles fährt die Hubbegrenzungsmutter auf die Übergangsbuchse auf. Dadurch werden die Übergangsbuchse und der Zwischendeckel axial verschoben und die Federelemente belastet. Die rotierende Übergangsbuchse reibt dabei an der Hubbegrenzungsmutter und an dem Zwischendeckel. Die auf diese Weise auftretenden Reibmomente und die Federkraft verzehren die eingeleitete Energie. Der Stellantrieb wird weich abgebremst. Die Größe der Bremsmomente ist durch eine geeignete Federauswahl einstellbar.

Die erfindungsgemäße Armatur zeichnet sich durch folgende Vorteile aus. Die Energie wird durch Reibung vernichtet, so daß nur kleine Federn benötigt werden. Die zur Energievernichtung notwendigen Elemente weisen ein kleines Einbauvolumen auf. Die für den Normalbetrieb verwendeten Antriebsteile und das Ventilverschlußorgan werden nicht beeinflußt, was bedeutet, daß die Spindel immer eine definierte Lage einnimmt und die Federelemente im Normalbetrieb nicht durch Spindelkräfte beansprucht werden.

Durch die Merkmale des Anspruches 2 wird erreicht, daß der Stellantrieb auch bei einer Spindelbewegung in Öffnungsrichtung abgebremst wird.

Mehrere Ausführungsbeispiele der Erfindung sind in der Zeichnung dargestellt und werden im folgenden näher erläutert. Es zeigen :

Fig. 1 im Schnitt eine Armatur gemäß der Erfindung und

Fig. 2 im Schnitt eine Armatur gemäß einer anderen Ausführungsform der Erfindung.

Von der Armatur ist nur der obere Teil des Gehäuses 1 mit dem Antrieb für die Spindel 2 gezeigt. Diese Spindel 2 ist durch eine Spindelbohrung in dem Gehäuse 1 hindurchgeführt.

An dem unteren Ende der Spindel 2 ist ein nicht dargestelltes Verschlußorgan befestigt, das bei einer translatorischen Bewegung der Spindel auf gehäuseseitige Dichtflächen gedrückt bzw. von diesen abgehoben wird.

Die translatorische Bewegung wird auf die Spindel 2 über eine Spindelmutter 3 übertragen. Die Spindelmutter 3 und die Spindel 2 sind jeweils mit einem miteinander in Eingriff stehenden Trapezgewinde versehen. An die Spindelmutter 3 ist seitlich ein Ansatz 4 angeformt, über den die Spindelmutter 3 innerhalb des Gehäuses 1 in zwei auf Abstand angeordneten Axial-Kugellagern 5 gelagert ist. Zur Begrenzung der Spindelbewegung in Schließrichtung der Armatur ist auf den Kopf der Spindel 2 eine Hubbegrenzungsmutter 6 aufgeschraubt und dort gesichert.

Ein nicht dargestellter elektromotorischer Stellantrieb greift über eine Übergangsbuchse 7 an die Spindelmutter 3 an. Bei der erfindungsgemäßen Armatur ist die Übergangsbuchse 7 mit der Spindelmutter 3 über eine Paßfeder 8 derart verbunden, daß die Übergangsbuchse 7 in Längsrichtung der Spindel 2 verschiebbar ist.

Zwischen der Übergangsbuchse 7 und dem Ventilgehäuse 1 bzw. dem Ansatz 4 der Spindelmutter 3 ist ein Zwischendeckel 9 vorgesehen, der die Spindelmutter 3 und die Spindel 2 umgibt und der ebenfalls in Längsrichtung der Spindel 2 verschiebbar ist.

Zwischen dem Zwischendeckel 9 und dem Gehäuse 1 bzw. dem Ansatz 4 der Spindelmutter 3 ist ein Federelement vorgesehen, das die Spindelmutter 3 umgibt. Dieses Federelement besteht aus mehreren übereinanderliegenden Tellerfedern 10.

Bei dem angenommenen Störfall, bei dem der Stellantrieb sich nach der Beendigung des Schließvorganges nicht abgeschaltet hat und weiterhin auf die Übergangsbuchse 7 wirkt, werden die Übergangsbuchse 7 und der Zwischendeckel 9 in Schließrichtung der Spindel 2 verschoben. Dadurch werden die Tellerfedern 10 belastet und die sich weiter drehende Übergangsbuchse 7 reibt an der Hubbegrenzungsmutter 6 und dem Zwischendeckel 9 solange, bis durch das dabei auftretende Reibungsmoment die in die Übergangsbuchse 7 eingeleitete Energie des Stellantriebes abgebremst ist und der Stellantrieb zum Stillstand kommt. Weil der axiale Abstand s der Hubbegrenzungsmutter 6 zur Übergangsbuchse 7 geringer ist als zur Spindelmutter 3, werden die für den Normalbetrieb verwendeten Antriebsteile und das Ventilverschlußorgan nicht beeinflußt.

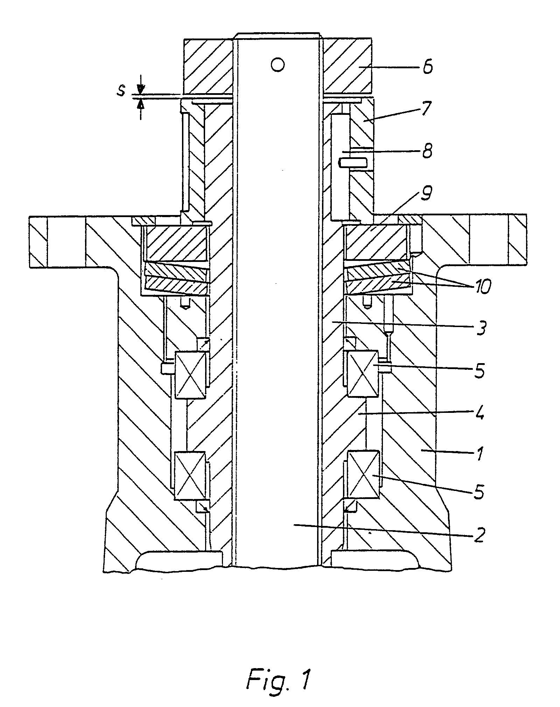

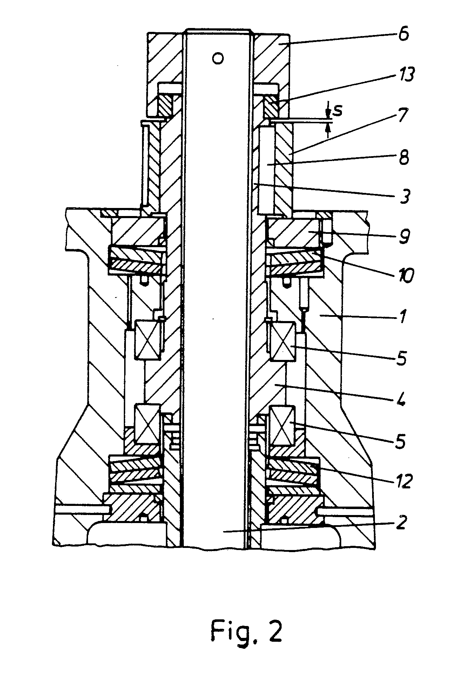

Die in Fig. 2 dargestellte Armatur unterscheidet sich von der nach Fig. 1 dadurch, daß unterhalb des Ansatzes 4 der Spindelmutter 3 ein weiteres, unteres Federelement 12 vorgesehen ist. Dieses untere Federelement 12 stützt sich auf dem Gehäuse 1 und an der Spindelmutter 3 ab. Für das untere und das obere Federelement werden gleiche Federtypen zum Beispiel Tellerfedern oder federnde Ringe verwendet. Oberhalb der Übergangsbuchse 7 ist die Spindelmutter 3 mit einem Anschlag, zum Beispiel einer Anschlagmutter 13 versehen.

Die in Fig. 2 dargestellte Armatur wirkt in Schließrichtung in der gleichen Weise wie die Armatur nach der Fig. 1. In Öffnungsrichtung wird auch das untere Federelement 12 wirksam. In Offenstellung der Armatur wird die Spindel 2 zur Entlastung der Stopfbuchse gegen einen Rücksitz im Verschlußdeckel des Gehäuses 1 gezogen. Die beschriebene Dämpfungseinrichtung verhindert auch in dieser Richtung bei einem Versagen der Antriebsabsteuerung eine unzulässige hohe Belastung der Übertragungsteile. Die Spindelmutter 3 wird daher gegen das untere Federelement 12 gezogen. Nach Durchfahren des Abstandes zwischen der Anschlagmutter 13 und der Übergangsbuchse 7 belastet die Spindelmutter 3 über die Anschlagmutter 13, die Übergangsbuchse 7 und den Zwischendeckel 9 auch die oberen Tellerfedern 10. Gleichzeitig entsteht ein Reibmoment zwischen der Übergangsbuchse 7 und dem Zwischendeckel 9. Die Federkräfte und das Reibmoment dämpfen das Stellantriebsmoment ab.

**Patentansprüche**

1. Armatur mit einem über eine steigende Spindel (2) in einem Ventilgehäuse (1) verschiebbaren Verschlußorgan, wobei die Spindel (2) mit einem elektromotorischen Stellantrieb über eine in dem Ventilgehäuse (1) gelagerte und über ein Federelement (10) abgestützte Spindelmutter (3) verbunden ist und auf die Spindel (2) eine Hubbegrenzungsmutter (6) aufgeschraubt ist, dadurch gekennzeichnet, daß die Spindelmutter (3) mit dem Stellantrieb über eine axial zur Spindelmutter (3) verschiebbare Übergangsbuchse (7) verbunden ist, daß die Übergangsbuchse (7) über einen die Spindelmutter (3) umschließenden, axial verschiebbaren Zwischendeckel (9) auf dem Federelement (10) abgestützt ist und daß der axiale Abstand der Hubbegrenzungsmutter (6) zur Übergangsbuchse (7) geringer ist als zur Spindelmutter (3).

2. Armatur nach Anspruch 1, dadurch gekennzeichnet, daß in einem Abstand oberhalb der Übergangsbuchse (7) die Spindelmutter (3) mit einem Anschlag (13) versehen ist und daß auf der anderen Seite der Spindellagerung (5) zwischen der Spindelmutter (3) und dem Gehäuse (1) ein weiteres, unteres Federelement (12) vorgesehen ist.

**Claims**

1. Valve fitting with a closure organ displaceable in a valve housing (1) through a rising spindle (2), wherein the spindle (2) is connected through a spindle nut (3), which is borne in the valve housing (1) and supported through a spring element (10), with a setting drive actuated by an electrical motor and a stroke-limiting nut (6) is screwed onto the spindle (2), characterised thereby, that the spindle nut (3) is connected with the setting drive through a transfer bush (7) displaceable axially of the spindle nut (3), that the transfer bush (7) is supported on the spring element (10) through an axially displaceable intermediate cover (9) enclosing the spindle nut (3) and that the axial spacing of the strokelimiting nut (6) from the transfer bush (7) is less than that from the spindle nut (3).

2. Valve fitting according to claim 1, characterised thereby, that the spindle nut (3) is provided with an abutment (13) at a spacing above the transfer bush (7) and that a further lower spring element (12) is provided between the spindle nut (3) and the housing (1) on the other side of the spindle bearing (5).

**Revendications**

1. Organe de robinetterie équipé d'un organe de fermeture déplaçable par une tige montante (2) dans un corps de vanne (1), la tige (2) se raccordant à un servomoteur électrique par l'intermédiaire d'un écrou de manœuvre (3) monté dans le corps de vanne (1) et prenant appui sur un élément de ressort (10), un écrou limiteur de course (6) étant vissé sur la tige (2), caractérisé en ce que l'écrou de manœuvre (3) est raccordé au servomoteur par une douille de jonction (7) déplaçable axialement vers l'écrou de manœuvre (3), la douille de jonction (7) prend appui sur l'élément de ressort (10) par un couvercle intermédiaire (9) déplaçable axialement, entourant l'écrou de manœuvre (3), et la distance axiale de l'écrou limiteur de course (6) à la douille de jonction (7) est inférieure à la distance à l'écrou de manœuvre (3).

2. Organe de robinetterie selon la revendication 1, caractérisé en ce que l'écrou de manœuvre (3) est doté d'une butée (13) placée à une certaine distance au-dessus de la douille de jonction (7), et un autre élément de ressort, en position inférieure est prévu de l'autre côté des paliers de tige (5), entre l'écrou de manœuvre (3) et le corps (1).

Fig. 1

Fig. 2